# EUROPEAN PATENT APPLICATION

(11) **EP 1 898 586 A1**
(43) Date of publication of application: **12.03.2008**
(21) Application number: 06291411.4
(22) Date of filing: 07.09.2006
(51) Int. Cl.: H04L 29/06

(54) **Protection for data transmission network systems against SYN flood denial of service attacks**

(71) Applicant: Mitsubishi Electric Information Technology Center Europe B.V., 1119 NS Schiphol Rijk, Amsterdam (NL); MITSUBISHI DENKI KABUSHIKI KAISHA, Chiyoda-ku, Tokyo 100-8310 (JP)
(72) Inventor: Mangin, Christophe, 35590 L'Hermitage (FR); Rollet, Romain, 35000 Rennes (FR); Mentre, David, 35700 Rennes (FR)
(74) Representative: Verdure, Stéphane

(57) **Abstract**

A method for managing the TCP connection establishment in a TCP network device, comprises receiving initial handshake ACK packets from respective sources; appending the received initial handshake ACK packets in a first input packet queue (101); consuming the initial handshake ACK packets of the first input packet queue so that they are forwarded with at least a connection opening period which defines a connection opening rate that can be lower than the arrival rate of the initial handshake ACK packets; and, prior to forwarding the initial handshake ACK packet at the head of the first input packet queue, permitting the allocation of the corresponding connection state context in the system.

## Description

### FIELD OF THE INVENTION

The present invention generally relates to data transmission networks, such as Internet. More specifically, it relates to the protection of network systems for performing processing of, for instance, Transmission Control Protocol ("TCP") packets. Such devices are called TCP Network device in the following and include a TCP Processing unit.

TCP is one of the foundational protocols of the Internet, as defined in Internet Engineering Task Force (IETF) Request for Comments (RFC) 793.

Essential features of TCP are to provide a secure transport layer by supporting out-of-order segment transmission, flow and congestion control mechanisms as well as retransmission of lost data, based on a sliding window mechanism. These functions particular to TCP require that TCP processing units maintain per-connection data structures that store the state of each connection. These data structures, referred to as connection contexts, comprise a re-assembly buffer, a transmission buffer, sliding window maintenance parameters, timers, etc...

Under harsh conditions, e.g. attacks, these connection contexts can consume excessive processing resource, in particular memory resource, leading to possible exhaustion of this resource in the TCP processing unit.

The fast development of the Internet has driven the need for network systems that perform packet processing at a semantic level above the network layer. Such systems include traffic observation and/or analysis systems, content inspection and transformation systems, Intrusion Detection Systems (IDS) as well as Intrusion Prevention Systems (IPS). Intrusion Detection Systems are of purely passive form, in the sense that they can only alert the receiver of the presence of malicious activity, whereas Intrusion Prevention Systems operate in-line (i.e., cut-through), that is to say analyse network traffic mid-stream.

A common feature of all these systems is that they must maintain perflow state of the traffic in order to correctly perform higher-level packet processing. Be they in-line systems or end-point systems, a core part of this state holding task consists in maintaining per TCP connection contexts that permit the implementation of TCP processing tasks such as connection establishment control, re-assembly, re-transmission, flow control, congestion control, etc...

### BACKGROUND OF THE INVENTION

Modern data transmission systems are subject to increasingly sophisticated attacks, such as for instance attacks of the connection flooding type. This kind of attack consists in exhausting the resources of network systems.

Indeed, a possible attack against a TCP network device is to open a large number of fake TCP connections, so that there is not enough TCP context memory available in its TCP processing unit to handle all the opened connections, causing further TCP connections to be dropped and therefore a Denial of Service (DoS) to occur.

Such an attack can be led easily since the attacker only needs to initiate a TCP handshake, that is send a SYN message to any web server for instance, then wait for the SYNACK message and finally send an ACK message. There is even no need to send any data, which would increase the network bandwidth required to perform this attack.

Many efforts have been made to prevent or at least limit damages from that kind of attacks, which have let to various types of answers.

Nevertheless, none of the known techniques of protection proves entirely satisfactory in all types of situations. The resource dimensioning must result from a trade-off between the need to provide the equipments with some level of resilience to attacks they may be targeted at and the necessity not to degrade too much their operation when they are not under attack.

### SUMMARY OF THE INVENTION

An aim of the present invention is to propose an alternative to the known techniques for protecting a TCP network device, including a TCP processing unit, against attacks of the connection flooding type.

To this end, embodiments of the invention are based on a scheme that regulates the allocation and release of TCP connection contexts in the TCP processing unit.

According to a first aspect of the present invention, there is thus proposed a method of managing the TCP connection establishment in a TCP network device including a TCP processing unit, comprising the following steps:
- receiving initial handshake ACK packets from respective sources;
- appending the received initial handshake ACK packets in a first input packet queue;
- consuming the initial handshake ACK packets of the first input packet queue so that they are forwarded with at least a connection opening period which defines a connection opening rate that can be lower than the arrival rate of the initial handshake ACK packets; and,
- prior to forwarding the initial handshake ACK packet at the head of the first input packet queue, permitting the allocation of the corresponding connection state context in the TCP processing unit.

This slow-down allocation mechanism that is proposed here is based on the usage of an input packet queue, i.e., a FIFO, in which the TCP initial handshake ACK packets are appended. Packets are consumed, processed and forwarded by the TCP re-assembler at a rate that can be lower than their arrival rate, in order to reduce the TCP connection opening rate. Therefore, in what follows, the mechanism will also be referred to as a connection rate control mechanism.

According to some embodiments, there is further implemented a fake connection establishment detection mechanism which is based on a timer set each time a connection sends any data. Upon timer expiration, a signal is set towards the TCP processing unit so that the latter can perform the necessary operations to close the connection and release the corresponding context.

This fake connection establishment detection mechanism does not completely remove the risk of DoS, but it will favour TCP connections with significant traffic activity. To circumvent this mechanism, an attacker would be forced to continuously open TCP connections as fast as fake connections are closed. However, such an activity can be detected using statistics (source addresses are not spoofed). Another solution for the attacker would be to send real traffic (or keep alive segments) over the fake opened TCP connection. This would assimilate the fake TCP connections to real TCP connections, and would imply a much higher network resource (bandwidth) cost to the attacker.

In addition, in order to improve the scheme's efficiency, the TCP connection opening period and/or the connection closing timer may be adjusted based on information relating to the state of the system. In some embodiments, the information relating to the state of the system may be the number of free TCP contexts in the system. For instance it may be provided that the less memory resource is available, the longer it is to open and the faster it is to close a connection.

Still further the mechanisms may be activated when the TCP processing unit is under attack only, so that their negative impact to the normal operation of the TCP processing unit is limited to those situations in which it is necessary.

The connection establishment rate control mechanism and the fake connection establishment detection mechanism allow to slow down TCP connection establishments and to eliminate fake TCP connections, respectively.

The mechanisms may be applied separately one from the other. However, when combined, it is possible to adjust the value of the closing timer as a function of the connection opening period, or vice versa, depending on the number of free TCP contexts.

A second aspect of the present invention relates to a device for managing the use of connection state contexts in a data transmission network system, comprising:
- an input data link for receiving initial handshake ACK packets from respective sources;
- a first input packet queue in which the received initial handshake ACK packets are appended;
- a control unit adapted to consume the initial handshake ACK packets of the first input packet queue so that they are forwarded with at least a connection opening period which defines a connection opening rate that can be lower than the arrival rate of the initial handshake ACK packets; and to forward the initial handshake ACK packet at the head of the first input packet queue after having allocated a corresponding connection state context in the system.

A third aspect of the present invention is directed a data transmission network system comprising a device according to the second aspect.

Finally, fourth and fifth aspects of the present invention relate, respectively, to a computer-readable medium carrying one or more sequences of instructions for implementing a method according to the first aspect, and to a computer program product comprising one or more stored sequences of instructions that are accessible to a processor and which, when executed by the processor, cause the processor to implement a method according to the first aspect.

### BRIEF DESCRIPTION OF THE DRAWINGS

The present invention is illustrated by way of example, and not by way of limitation, in the figures of the accompanying drawings in which like reference numerals refer to similar elements and in which :
- Figure 1 is a diagram illustrating the architecture of the TCP network device ;
- Figure 2 is a chart illustrating the operation of the device according to embodiments of the invention ;
- Figure 3 is a diagram illustrating the connection idle time and ACK forwarding rate ;
- Figure 4 is a chart which gives the idle time of a TCP connection vs. the number of available packets ; and,
- Figure 5 is a chart which gives the establishment period of a TCP connection vs. the number of available packets.

### DESCRIPTION OF PREFERRED EMBODIMENTS

The description that follows is intended at defining the main principles of the proposed scheme that regulates the allocation and release of TCP connection contexts in a TCP network device.

The TCP Network device is a generic device that performs processing function on a per TCP flow basis. For each managed TCP connection, the device needs to allocate a context that may be updated each time it receives some packets that belong to the attached TCP connection. The TCP network device is able to get TCP packets that come from both directions.

The TCP network device may be a TCP end point server. In that case, received packets are re-assembled and the byte stream contained in the TCP payload is passed to the upper layer. TCP signalling (TCP headers, ACK...) are generated by the TCP processing unit.

The TCP network device may alternatively be a monitoring device that performs statistics upon each TCP connections. In that case, TCP packets are just analyzed by the TCP processing unit and then forwarded to the TCP end-point.

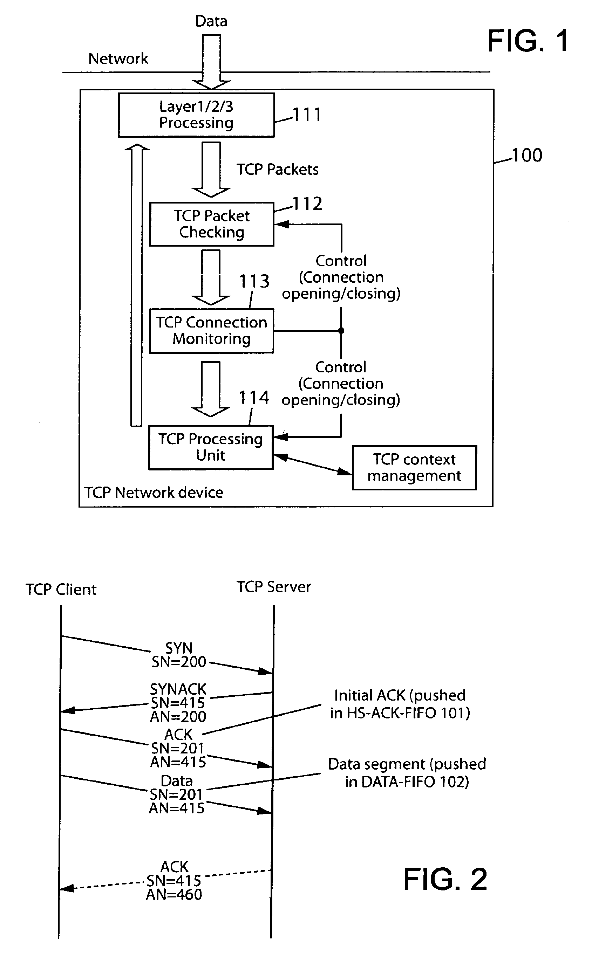

Figure 1 describes the architecture of the TCP Network device 100.

TCP packets are received from the network, and lower layer processing is applied in unit 111. Then, a TCP packet checking unit 112 is in charge of checking the validity of TCP packets before sending them to the other units which include a TCP Connection Monitoring unit 103 and a TCP Processing unit 104. The following processing functions are executed by the unit 112:
- TCP checksum calculation and comparison ;
- connection identification (addresses, ports);
- correct sequence numbers ;
- initial handshake ACK marking (sequence number equal to initial sequence number plus one) ; and,
- discarding packets that do not belong to opened connections

Valid TCP packets are forwarded to the TCP Connection Monitoring unit 113. Other packets are discarded. In particular, ACK packets that were not preceded by SYN and SYNACK packets are rejected. In order to achieve this function, the TCP Packet Checking unit 112 has access to TCP packets transiting from both directions. In the case of a TCP end-point server, the TCP Packet Checking unit 112 has access to the signalling part of the TCP packets emitted by the TCP Processing Unit 114. Describing the implementation of those functions is out of scope and aim of the present description.

The TCP Connection Monitoring unit 113 is in charge of regulating the initial handshake ACK packets (marked by the TCP Packet Checking unit) before forwarding them to the TCP Processing unit, and giving authorization to the TCP Processing unit 114 to allocate or release TCP connection contexts. Other received TCP packets are directly forwarded to the TCP Processing unit 114. Description of this unit will be detailed below.

At last, the TCP Processing unit 114 performs some tasks from the received TCP packets, depending on the kind of device it is implemented in. One common task is connection context management: operation such as allocation or release of connection contexts are performed taking into account indications sent by the TCP Connection Monitoring unit 113. Describing the operations of the TCP processing unit is out of scope and aim of the present description.

### Resilience to Attacks

A TCP network device can be subjected to attacks. These attacks can mainly target the resource implemented to maintain the TCP connections states and byte stream content, in particular the connection state contexts in the TCP processing unit. Typical attacks against the TCP network device consist in exhausting these resources in the TCP processing unit.

Some mechanisms will now be described that are aimed at mitigating the resource exhaustion attacks consisting in flooding by complete connection establishment handshakes (also known as connection flood).

These mechanisms are based on an optimised resource dimensioning or a graceful degradation of the operation when the TCP network device is under attack.

In the following description, it will be presented a scheme that regulates the allocation and release of TCP connection contexts by a TCP processing unit within a TCP network device.

TCP context allocation is supposed to be performed once the initial TCP handshake is complete, that is once SYN, SYNACK and ACK packets have been exchanged between the TCP transmitter and the TCP receiver. In the prior art, TCP context release is performed when the TCP connection is closed (normal case), or when the device detects that there is not enough traffic exchanged between TCP end-points.

Connection opening and then the connection closing will be considered successively. Finally, embodiments of an algorithm implementing the scheme will be described in details.

### Connection Opening

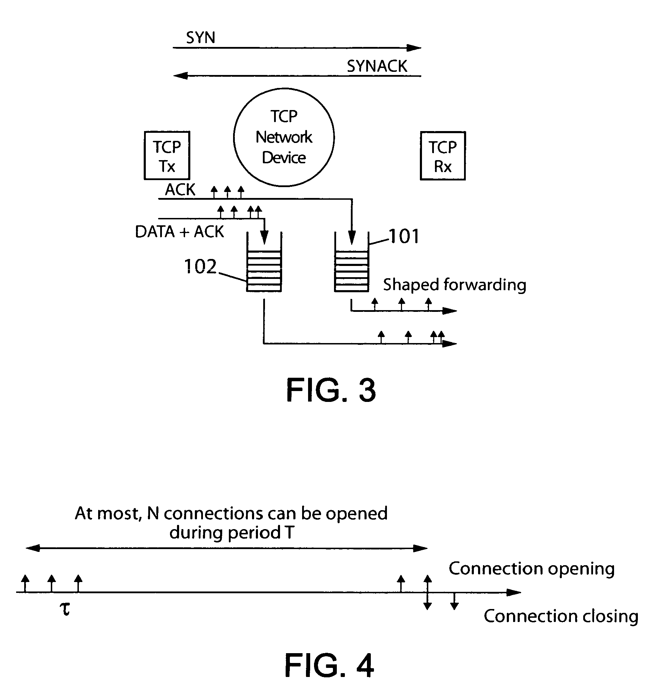

With reference to Figures 2 and 3, operation details of the TCP connection establishment rate control will now be presented.

Figure 2 shows diagrammatically the exchange of messages between a TCP client and a TCP server, including the sending of synchronisation messages (SYN), of synchronisation and acknowledgment messages (SYNACK) and of acknowledgment messages (ACK). In the figure, the letters "SN" stand for "Sequence Number" and the letters "AN" stand for "Acknowledged sequence Number".

Upon reception in the TCP Packet Checking unit 112, ACK packets belonging to not yet opened connections, i.e., data packets which carry the flag ACK, are first analysed to check the coherency of the claimed sequence numbers with those of the SYN and SYNACK packets that were received previously. If coherent, ACK packets are marked and forwarded to the TCP Connection Monitoring unit 113. Upon arrival, they are put in a dedicated FIFO 101, called HS-ACK-FIFO (standing for HandShake ACK FIFO) and their forwarding to the TCP Processing unit 114 is postponed. Consequently, packets are added to the FIFO 101 at the data link rate.

If a data segment is received after this initial handshake ACK packet (the source is authorised to emit data packets immediately after the emission of the ACK packet), this packet is also marked by the TCP Packet Checking unit 112, and appended by the TCP Connection Monitoring unit 113 to a second FIFO 102, called DATA-FIFO. Such packets are checked by analysing their sequence number that shall be equal to the initial sequence number plus one. Only one data packet can be stored since sequence numbers of successive packets cannot be checked before the allocation of a connection context. Consequently, further data packets (i.e. packets whose sequence number is greater than the initial sequence number plus one) are then discarded by the TCP Packet Checking unit 112 and will be eventually retransmitted by the source. As long as an initial ACK is pending in the HS-ACK-FIFO, the corresponding connection is referred to as pending, and only one further data segment can be appended to the DATA-FIFO.

ACK packets are consumed, processed and forwarded to the TCP Processing unit 114 at a rate that can be lower than their arrival rate, in order to reduce the TCP connection opening rate.

To this end, packets of the HS-ACK-FIFO are consumed by the TCP re-assembler so that they are forwarded on the output data link with at least a τ period. This period defines the transmission rate of the ACK packets (out of the re-assembler) which can be lower than their arrival rate. This period may be constant or variable. In the latter case, the value τ(t) may be updated by the algorithm detailed below.

A simple timer is used to implement the consumption process: each time the process get a packet from the HS-ACK-FIFO, the timer is reset to τ(t). Upon expiration, a new ACK is extracted and the timer is reset to τ(t). If the FIFO is empty, then the timer is not reset and the process waits for an ACK arrival in the FIFO.

Each time an ACK packet is forwarded, and preferably prior to forwarding the same, an indication is sent to the TCP Processing unit 114 and to the TCP Checking unit 112 to mark the corresponding connection as opened. Sending such indication may be implemented by setting a signal. Upon reception of this indication, the TCP processing may allocate a connection context, and the TCP Packet Checking unit 112 forwards all packets belonging to the connection.

After an ACK is forwarded, the forwarding process checks if the packet at the head of the DATA-FIFO belongs to the same TCP connection. If this is the case, the data packet is consumed and forwarded to the TCP Processing unit 114 exactly as if it was just received from the input data link. As packets are kept in order in both FIFOs, and in each FIFO, there are no more than one packet of each connection, then this mechanism is sufficient to guaranty that all the packets of the DATA-FIFO are consumed.

### Connection Closing

In order to ensure the connection closing, another timer is reset to a given value T_{Idle} (being the time during which the connection can remain idle) for each opened TCP connection, when the initial handshake ACK packet has been forwarded and each time a valid data packet belonging to that connection is received whatever the direction is. This timer period also may be variable, and the value T_{Idle}(t) may then be calculated by the algorithm detailed below.

Upon timer expiration, an indication is sent to the TCP Processing and TCP Checking units to mark the corresponding connection as closed. The TCP Processing unit may send TCP RST packets to indicate other TCP end-points that the connection is closed, and the TCP connection context is released as well as the source addresses of the transmitter and of the receiver.

### Algorithm

An algorithm will now be presented, that allow to ensure TCP connection establishment rate control and fake connection establishment detection.

It has been assumed that τ(t) is the minimum period between two forwarded ACKs, i.e. the connection establishment period. It has further been assumed that T_{Idle}(t) is the idle connection life time, that is to say the maximum time a TCP connection can be idle before being released by the TCP re-assembler. Let now N(t) be the number of free contexts at instant t, and N_{Max} the total number of contexts available in the system (i.e. the maximum number of simultaneously supported TCP connections).

In order to keep at least one available TCP context during a TCP fake connections attack (i.e. all opened TCP connections are faked and do not transmit any data), the following relationship between these variables must be set: τ(t) = T_{Idle}(t) / N(t).

The diagram in Figure 4 illustrates this relationship. On this diagram, the small arrows on the upper side of the time axis represent the instants at which a connection is opened, and the small arrows on the lower side of the time axis represent the instant at which a connection is closed.

Due to network latencies and host response time, a minimum value T_{Min} of the idle connection life time must be defined. Indeed, defining a too short timer value can lead to close innocuous TCP connections that only suffer from slow response time.

Let τₘᵢₙ be the minimum value of τ. It follows that τₘᵢₙ defines the maximum rate at which ACK can be forwarded on the output data link.

At last, there is defined a threshold N_{T}, applied to N(t), so that:
if N(t)>N_{T} then τ(t) = τₘᵢₙ and,
if N(t)<N_{T} then T_{Idle}(t) = T_{Min}, which imposes N_{T} = T_{Min}/τₘᵢₙ.

The following pseudo-code may be applied to determine T_{Idle}(t) and τ(t):

```
        If N (t) >NT
             τ(t)= τmin
             TIdle(t)= τmin. N(t)
        Else
             TIdle (t) = TMin
             τ(t)= TMin/ N(t)
        Endif
```

While N is greater than N_{T}, the ACK forwarding rate is kept constant and the allowed connection idle time is adjusted in order to "kill" as many TCP connections as new ones are opened. When N(t) becomes lower than N_{T}, the minimum acceptable connection idle time is reached and the algorithm forces the ACK forwarding rate to be reduced in order to limit new connection establishments.

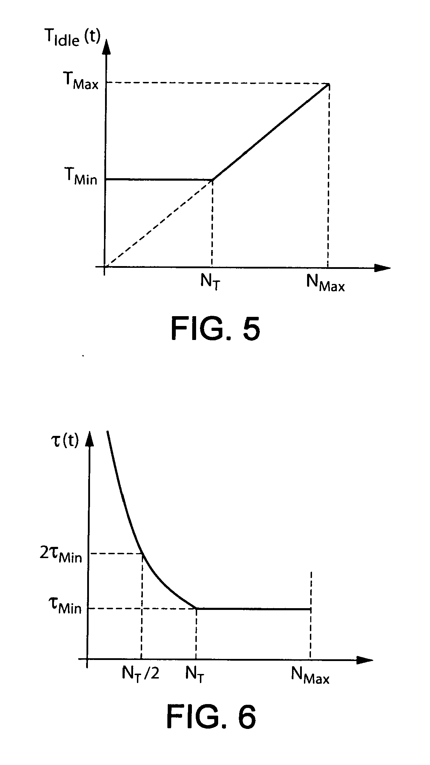

The diagram in Figure 5 gives the idle time T_{Idle}(t) versus the number of available contexts N(t), and the diagram in Figure 6 gives the establishment period τ(t) versus N(t).

The HS-ACK-FIFO and DATA-FIFO have a finite size which may advantageously be derived from the TCP retransmission timeout. Indeed, the TCP source is able to retransmit any packet if it is not acknowledged by the receiver within this retransmission timeout. The value of the retransmission timer (T_{RTx,TCP}) depends on the state of the TCP automaton in the transmitter and on the TCP implementation. However, it is generally set to several seconds, so that the FIFO must contain at most all the packets that can be emitted during this period T_{RTx,TCP}. Knowing the minimum period used for ACK forwarding (τₘᵢₙ), the FIFO size can be set equal to T_{RTx,TCP}/τₘᵢₙ.

In order to limit the impact of such an algorithm on the processed TCP traffic, the scheme can be activated only when the number of free TCP contexts (i.e. N(t)) is lower than a defined threshold N_{E} (for instance N_{E}=N_{Max}/2). In this case, the threshold N_{T} must be set lower than N_{E}. By applying this extension, the connection opening rate control mechanism may be enabled only when the equipment is held to be under attack.

The present invention can be implemented in hardware, software, or a combination of hardware and software. Any processor, controller, or other apparatus adapted for carrying out the functionality described herein is suitable.

The present invention can also be embedded in a computer program product, which comprises all the features enabling the implementation of the methods described herein, and which - when loaded in an information processing system - is able to carry out these methods. Computer program means or computer program in the present context mean any expression, in any language, code or notation, of a set of instructions intended to cause a system having an information processing capability to perform a particular function either directly or after either or both of the following a) conversion to another language. Such a computer program can be stored on a computer or machine readable medium allowing data, instructions, messages or message packets, and other machine readable information to be read from the medium. The computer or machine readable medium may include non-volatile memory, such as ROM, Flash memory, Disk drive memory, CD-ROM, and other permanent storage. Additionally, a computer or machine readable medium may include, for example, volatile storage such as RAM, buffers, cache memory, and network circuits. Furthermore, the computer or machine readable medium may comprise computer or machine readable information in a transitory state medium such as a network link and/or a network interface, including a wired network or a wireless network, that allow a device to read such computer or machine readable information.

While there has been illustrated and described what are presently considered to be the preferred embodiments of the present invention, it will be understood by those skilled in the art that various other modifications may be made, and equivalents may be substituted, without departing from the true scope of the present invention.

In particular, whereas the invention has been described in connection with the management of TCP connection contexts, other data transmission protocols may advantageously benefit from the advantages of the invention, provided they rely on a handshake for the connection opening comprising sending of an ACK packet by the emitter and/or the receiver whose reception by its destination completes the connection opening.

Additionally, many modifications may be made to adapt a particular situation to the teachings of the present invention without departing from the central inventive concept described herein. Furthermore, an embodiment of the present invention may not include all of the features described above. Therefore, it is intended that the present invention not be limited to the particular embodiments disclosed, but that the invention include all embodiments falling within the scope of the appended claims.

## Claims

1. Method of managing the TCP connection establishment in a TCP network device including a TCP Processing unit, comprising the following steps:
- receiving initial handshake ACK packets from respective sources;
- appending the received initial handshake ACK packets in a first input packet queue (101);
- consuming the initial handshake ACK packets of the first input packet queue so that they are forwarded with at least a connection opening period which defines a connection opening rate that can be lower than the arrival rate of the initial handshake ACK packets; and,
- prior to forwarding the initial handshake ACK packet at the head of the first input packet queue, permitting the allocation of the corresponding connection state context in the TCP processing unit.

2. Method according to claim 1, further comprising the steps of:
- receiving, from a given source, the first data segment subsequent to the initial handshake ACK packet received from said source;
- appending said first data segment subsequent to the initial handshake ACK packet in a second input packet queue (102), and discarding any further data segment received from said source; and,
- upon transmission of an initial handshake ACK packet, consuming the packet at the head of the second input packet queue if it belongs to the same connection as said initial handshake ACK packet, and forwarding it.

3. Method according to claim 1 or 2, further comprising the steps of:
- resetting a timer to a given connection closing timer value for each opened connection, when the initial handshake ACK packet of said connection is forwarded and each time a valid data packet belonging to that connection is received;
- upon expiration of the timer, indicating that the corresponding connection is closed.

4. Method according to anyone of claims 1 through 3, wherein the connection opening period value and/or the connection closing timer value are variable.

5. Method according to claim 4, wherein the connection opening period value and/or the closing timer value are adjusted based on the state of the system, whereby the less number of free connection state contexts it is in the system, the longer it is to open a connection and/or the faster it is to close a connection.

6. Method according to claim 4 or 5, wherein the connection opening period value and/or the connection closing timer value are set to such respective values τ(t) and T_{Idle}(t), respectively, that, at each instant t, the relation τ(t) =T_{Idle}(t) /N(t) is satisfied, where N(t) denotes the number of free connection state contexts in the system at instant t.

7. Method according to claim 6, wherein the connection opening period value τ(t) and/or the connection closing timer value T_{Idle}(t) are set to such respective values, that:
if N(t)>N_{T} then τ(t) = τₘᵢₙ; and,
if N(t)<N_{T} then T_{Idle}(t) = T_{Min}
where N_{T} is a first threshold value, τₘᵢₙ is the minimum value of τ(t), and T_{Min} is the minimum value of T_{Idle}(t).

8. Method according to anyone of the preceding claims, wherein the steps in said claim are carried out only when the number of free connection state contexts in the system is lower than a second threshold value, and wherein said second threshold value is lower than the first threshold value.

9. Device (100) for managing the TCP connection establishment in a data transmission network system, comprising:
- an input data link for receiving initial handshake ACK packets from respective sources;
- a first input packet queue (101) in which the received initial handshake ACK packets are appended;
- a control unit adapted to consume the initial handshake ACK packets of the first input packet queue so that they are forwarded with at least a connection opening period which defines a connection opening rate that can be lower than the arrival rate of the initial handshake ACK packets; and to forward the initial handshake ACK packet at the head of the first input packet queue after having indicated that the corresponding connection is opened.

10. Device according to claim 9, further comprising means for implementing a method according to anyone of claims 2 through 8.

11. Data transmission network system comprising a device according to claims 9 or 10.

12. A computer-readable medium carrying one or more sequences of instructions for implementing a method according to anyone of claims 1 through

13. A computer program product comprising one or more stored sequences of instructions that are accessible to a processor and which, when executed by the processor, cause the processor to implement a method according to anyone of claims 1 through 8.
